# EUROPEAN PATENT SPECIFICATION

(11) **EP 1 017 271 B1**
(45) Date of publication and mention of the grant of the patent: **25.01.2006**
(21) Application number: 99926671.1
(22) Date of filing: 29.06.1999
(51) Int. Cl.: A01K 1/01

(54) **LITTER-FREE SELF-CLEANING HYDRAULIC TOILET FOR SMALL DOMESTIC ANIMALS USING ONLY WATER**
STREULOSER, SELBSTREINIGENDER, NUR WASSER VERBRAUCHENDER HYDRAULISCHER ABORT FÜR KLEINE HAUSTIERE
TOILETTE HYDRAULIQUE AUTONETTOYANT SANS LITIERE N'UTILISANT QUE DE L'EAU DESTINE A DE PETITS ANIMAUX DOMESTIQUES

(30) Priority: 30.06.1998 GR 98100246
(43) Date of publication of application: 12.07.2000
(73) Proprietor: Broussalis, John, 113 62 Athens (GR)
(72) Inventor: Broussalis, John, 113 62 Athens (GR)
(86) International application number: PCT/GR1999/000023
(87) International publication number: WO 2000/000018

(56) References cited:
- DE-A- 3 943 363
- FR-A- 2 247 585
- US-A- 4 729 342

## Description

The present invention is referring to an automatically self-cleaning hydraulic toilet for small animals (cats) using the pressure of the house-water to provide the necessary kinetic energy for the different operations of the apparatus.

The already existing toilets for cats, from the simplest to the most sophisticated ones are using cat-litters. But the mixture of urine with the cat-litter induces malodor and respiratory problems to people and animals as well, due to the resulting chemical combinations.

The existing apparatus, in order to face the above problem, they use a sort of a comb, which takes off the solid cat waste and stores it in a special container and feed it with new fresh cat-litter.

As for its cost, it varies from rather expensive to expensive, if we use cat-litter of superior quality In spite of all the above, the malodor does not disappear completely.

The above mentioned invention can be realized with two different types of drainage:
**A)** In common drainage system of the house (free flow)
   **Type 1.** Which does not need any waiting time between two consecutive uses.
   **Type 2.** Which needs some time interval between two consecutive uses.
**B)** In the drainage system of the **W.C.** or similar of the house.
   **Type 3.** Which needs some time interval between two consecutive uses, as in type 2.

A toilet according to the preamble of claim 1 is know from US-A-4 729 342.

### SUMMARY OF THE INVENTION

The above mentioned automatic self cleaning toilet for small domestic animals according to the present invention, is characterized by the features of claim 1.

This toilet is not using cat-litters, is cleaned with water of the house network, collects the solid cat waste, pulps and liquefies it in types 1,2 and canalizes them to any drain of the house completely automatically. In type 3 the waste is not pulped and mashed, so the drain should be the W.C. drain or similar.

According to the invention, in type 1, the apparatus uses alternatively as toilet both sides of a horizontal surface, which turns upside down after each use (type 1), or one side only of a horizontal surface (type 2,3).

As soon as the animal leaves the toilet, a hydraulic system controlled by a time-switch/relay (XΔ1) is energized by an electric-valve, is cleaning (with water from the water supply network of the house) the used side of the apparatus (type 1) after having turned it upside-down. In this apparatus (type 1), the cleaned surface turns back in its initial position by means of springs. The rotation of the surface is based on the use of a mechanical guide (9), which provokes a rotation of the axis of the surface each time, by 180 degrees. After the cleaning of the dirty surface, the opposite surface is cleaned as well, by a similar to the first hydraulic system.

After the cleaning of the surfaces, the waste is gathered in a basin (10) in type (1), or from the drain-pipe (10) (Sheet4, fig.11-12) and (Sheet 5,Fig.15-16) where from it is guided to the exit of the apparatus (27), after being obliged to pass through, in all three types (1,2,3) from a special drain of the apparatus which is formed by a vertical wall-surface (23a) (Sheet 4, Fig.12-13) and (Sheet 5, Fig 15-16) in order to prevent the malodor coming out from the drain to enter to the apparatus. The waste of the cat in types (1,2) is pulped by the masher/mixer (25) in the liquefaction room (23) before its exit from the apparatus.

In all three types, the pressure of the water is used for cleaning and a power source of 12V. DC&AC to operate the electric/electronic equipment of the apparatus. The masher/mixer, which is also controlled by a similar to the mentioned above time switch/relay takes on the pulping of the waste of both cleanings (type 1), which is finally guided with the flow of the water of the apparatus to any drain of the house as in type 2 also. In type 3 of the apparatus the waste is not pulped, but is guided to a larger cross-section drain of the house. In types (2,3), we use only one time-switch/relay, which in type (2) is energizing simultaneously the electric valve and the masher/mixer.

### ADVANTAGES OF THE INVENTION

### COMMON FEATURES OF THE THREE TYPES

a) It doesn't need any personal assistance in any phase of its function. As a result, the owner of the pet is totally free to deal with other occupations.
b) It uses the water of the house network and a 12V. DC&AC current source for the operation and cleaning of the apparatus.
c) It doesn't use cat-litter at all.

### SPECIAL FEATURES OF THE APPARATUS

### TYPE 1

a) It uses alternatively both sides of a rotating surface, as a toilet, avoiding wasting of time for cleaning between two consecutive uses of the apparatus.
b) It doesn't need a special drain (that is of larger cross-section) for the solid waste of the cat, as it is pulped and liquified by a masher/mixer before its exit from the apparatus.

### TYPE 2

a) The cat uses only a horizontal solid surface as a toilet, therefore it needs some seconds for cleaning between two consecutive uses.
b) It doesn't need any special drain of the house for the solid waste of the cat, as it will be pulped by a masher/mixer before its exit from the apparatus, as in type 1.

### TYPE 3

a) It uses a solid horizontal surface as a toilet, as in type 2, that is why it needs some seconds for cleaning between two consecutive uses.
b) It uses as a drain, the same or similar to the W.C. of the house, that means of large cross-section, as the waste will not be pulped before.

### BRIEF DESCRIPTION OF THE REPRESENTATION OF DRAWINGS

Sheet 1
   - Fig 1: Plan of the apparatus
   1. level 1
   2. level 2
   3. level 3 (basin)
   4. sliding door, entrance /access to the apparatus.
   - Fig 2: horizontal section of the apparatus in the level of the axes of the 4 boards, before their rotation of 180 degrees.
   - Fig 3: horizontal section of the apparatus in the level of the axes after their rotation of 180 degrees.
Sheet 2
   - Fig 4: section of the apparatus in the level of the basin.
   - Fig 5: section of the apparatus in the level of the pulping and liquefaction room.
   - Fig 6: transversal section A-A fig.5.
Sheet 3
   - Fig 7: transversal section B-B of the Figures 1-2-3.
   - Fig 7a: operation of sliding aluminum frame (5) with the 4 boards on the 2-rail (15).
   - Fig 8: details of the rotation of the 4 boards of 180 degrees.
   - Fig 9: hydraulic mechanism of transposition of the aluminum frame and the 4 boards.
   - Fig 10: mechanism of stabilization of the axes on the thin sides of each one of the 4 boards of the apparatus.
Sheet 4
   - Fig 11: plan of the apparatus
   1.level (1)
   2.level (2)
   - Fig 12: horizontal section below level(2)
   - Fig 13: transversal section of the apparatus.
Sheet 5
   - Fig 14: Plan of the apparatus
   1. level(1)
   2. level(2)
   - Fig 15: horizontal section below level(2)
   - Fig.16: transversal section of the apparatus

### ANALYTICAL DESCRIPTION OF THE APPARATUS

### TYPE 1

The apparatus is a self cleaning hydraulic toilet for small domestic animals (cats) which uses only water from the house network, it works automatically and does not need any persons presence.

The apparatus is composed of:
1) One horizontal surface /toilet, which is composed from 4 rotating boards not touching each other, rotating around their axes of 180 degrees (so as their two sides be used alternatively), which are included within an aluminum frame (5) which is sliding, with the help of small wheels (5a) on top of 2 aluminum rails (15) (type1).
2) One sliding system of the aluminum frame (5) including within 4 boards, sliding from position (1) to position (2) in order to realize the 180 degrees rotation around their axes and to permit to the cat to use the clean opposite sides of the 4 boards as toilet without any waiting time for cleaning the already used surfaces.
3) One micro-switch (MΔ1) (35) sheet 2 fig.4 being energized after the cat leaves the toilet and activates the first electric valve (HB1) through a set time-switch/relay (XΔ2) and another similar switch/relay, which activates a masher/mixer (12V-3A-AC)(25&25a) for the pulping and liquefying of the cats waste before its exit (27) from the apparatus (sheet3, fig.5)
4) From one spring system (34) which brings the aluminum frame (5) and the included within 4 boards, back in the initial position (1) by sliding them from position (2) to position (1) with the help of the rails.
5) From a third set time/switch (XΔ3) similar to the already mentioned which activates the second electric-valve of the apparatus in order to clean also the opposite sides of the 4 boards as well as for a second cleaning of the pulping and liquefaction room (23) from the shower (40).
6) A basin (10) which temporary collects the cat's waste and the water used for cleaning the used sides (types 1,2,3). At the basin (10) are supported: a) the two rails (15), to help sliding the aluminum frame with the 4 boards, b) A water jet system through the tubes (16) and (17) of the electric- valves (HB1) and (HB2) for the cleaning of both surfaces of the toilet, γ) the two surfaces (11) and (12) supporting the frame (5) and the 4 boards in positions (1) and (2) before and after their rotation and before starting their cleaning, δ) the two micro-switches (MΔ1) and (MΔ2) in position (35) and (36) for the two consecutive orders for cleaning the two sides of the toilet, ε) the surface (13) supporting the rotation mechanism of the boards, στ) the hole (18) from which the cat waste and water used for it are drained from the basin(10) to the pulping and liquidizing room (23) (type 1,2).
7) From a mashing and liquidizing room(23) before the exit of the waste from the apparatus.

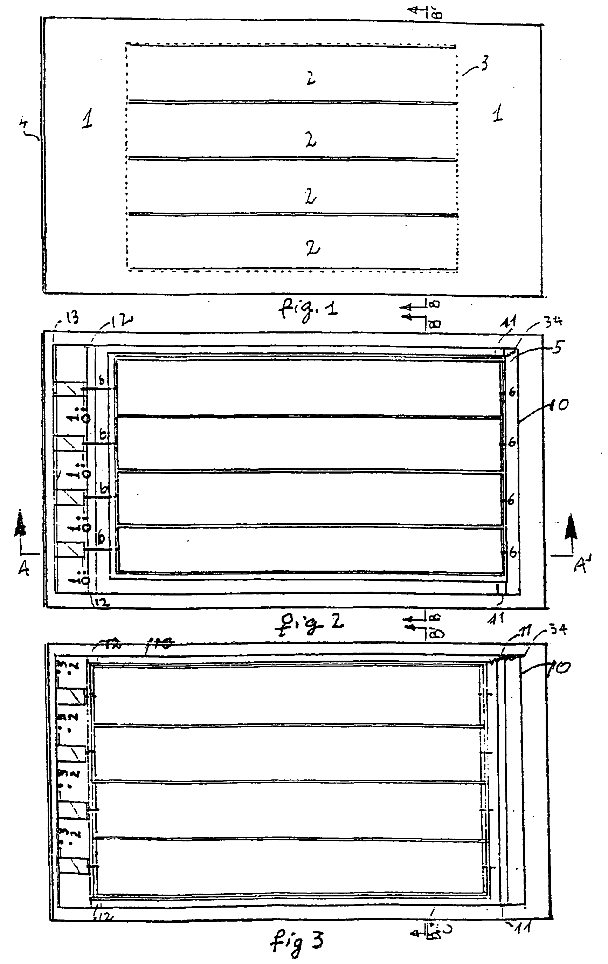

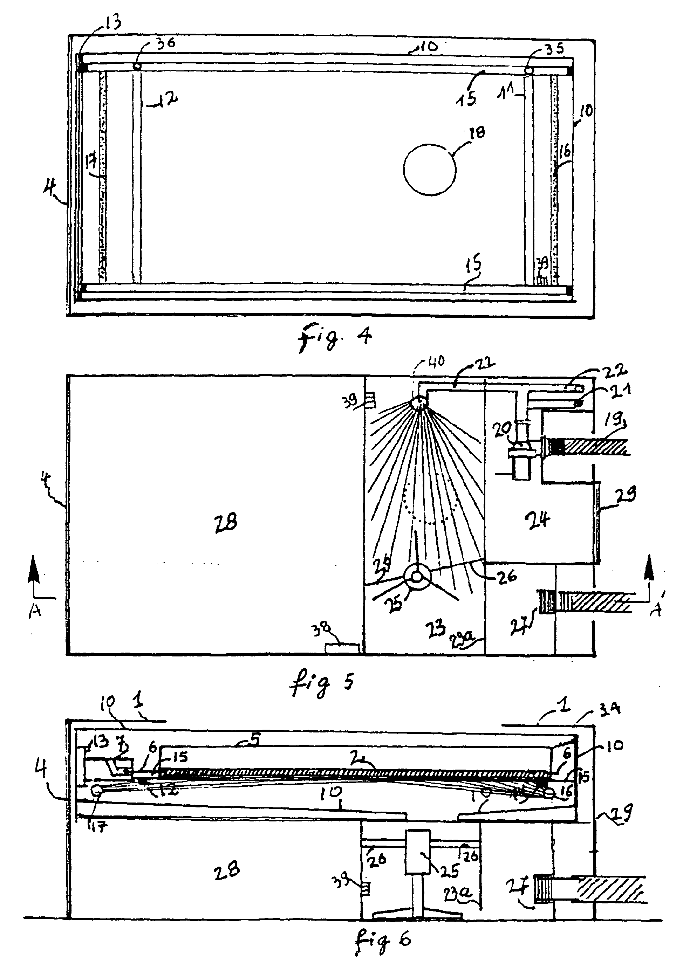

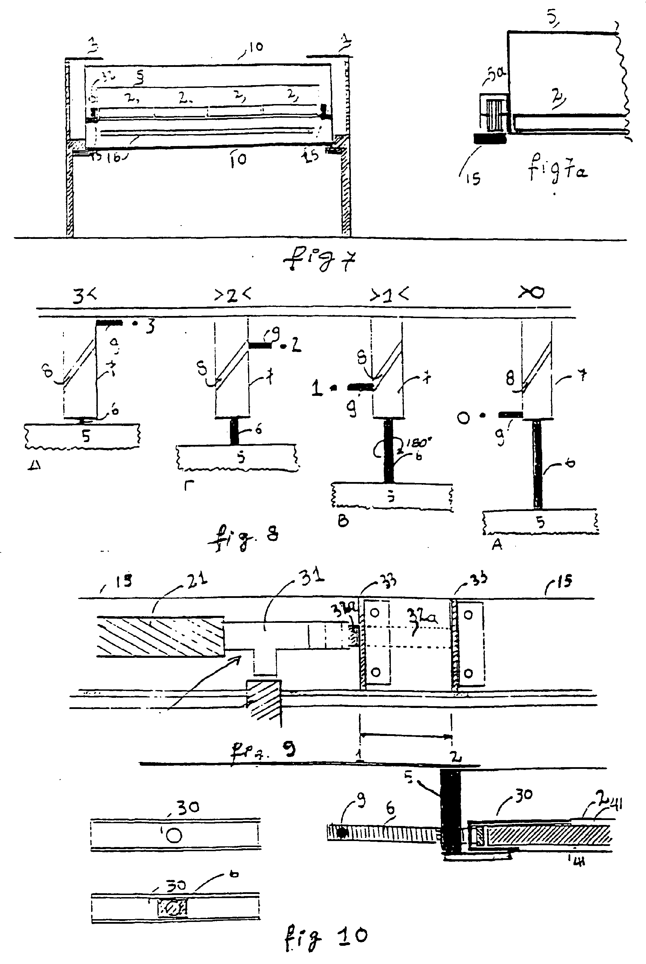

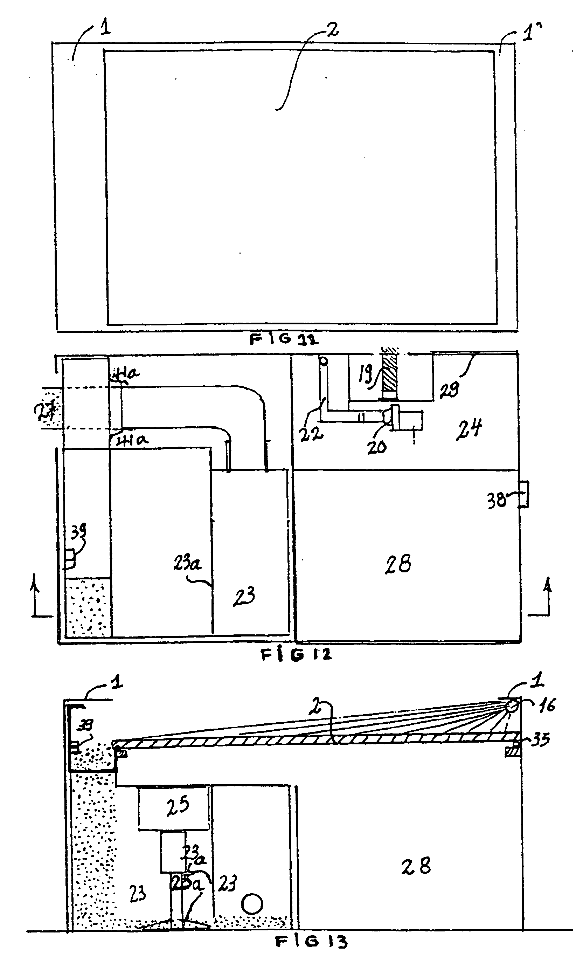

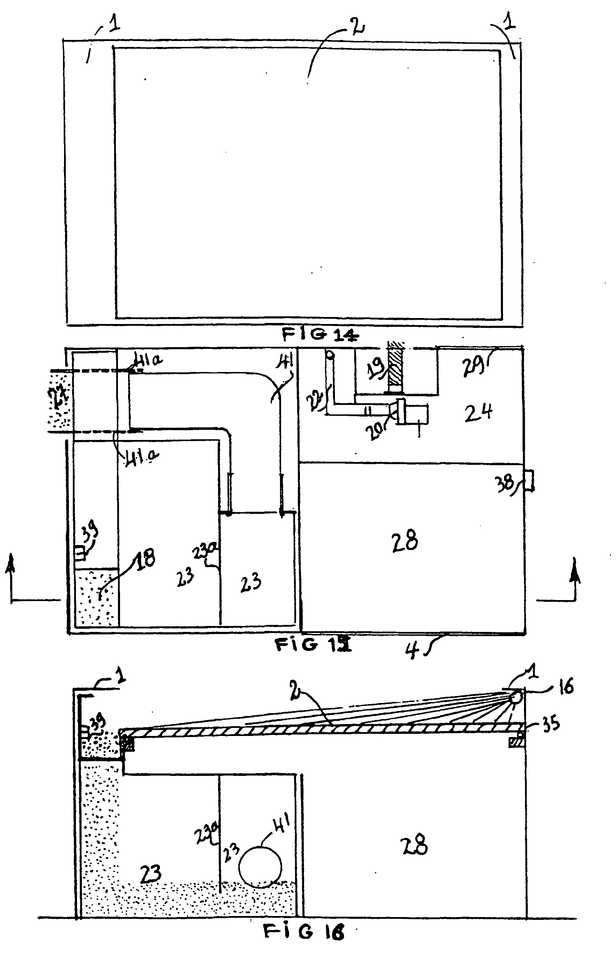

The apparatus has the shape of a rectangular parallelepiped, the dimensions of which are considered as 65x36x25 cm. In sheet 1 fig.1 (level 1) we see the plan of the upper part of the surface 65x36cm in the middle of which there is an opening of 42x30 cm, from which the cat should pass to its way to the toilet (level 2) which is 5 cm below the upper part of the apparatus indicated in the same sheet (1) by discontinuous lines, more analytically the apparatus is composed from 4 levels. The level (1) is the upper part of the apparatus, shown in (sheet 1,Fig1), through which the cat will pass in its way to the toilet (level 2)(Sheet 1,Fig2).

This is a horizontal surface which is composed of 4 non-touching between them boards and which are included within the aluminum frame (5) of indicative dimensions 50x30x1cm. In the left part of the apparatus there is a sliding door (4) which is the entrance/access to the interior. The 4 boards are rotating around their axes (6) (Sheet1, Fig. 2-3) on their smaller sides, which are penetrating through the two smaller sides, of the aluminum frame, having the length of 5 cm on the left side and 1 cm at the right side. The indicative sides of the boards are 48x6x1 cm. As the thickness of the boards is very thin, and we cannot fix the axes in their middle, we use aluminum (Π) (30) (Sheet 3,Fig10) of the same interior dimensions as the thickness of each board. Two same (Π) (30) are fixed in the each smaller side of each board to hold in fixed positions the axes-screws (Sheet3, Fig.10), with rectangular heads, to retain fixed in each small side of each board (Sheet3, Fig.10). The 4 mentioned axes (6) from their left side (Sheet1, Fig.2-3) are penetrating inside the 4 corresponding fixed cylinder-grooves (7). On the side board of the basin (10), which temporarily collects the cats waste and which holds the sliding system of the aluminum frame (5) including the 4 boards, on top of the two aluminum rails (15), as well as the fixed surface (13) which holds the rotation mechanism of the 4 mentioned boards.

On the level 3 (Sheet2, Fig4) the basin (10) which temporarily collects the cats waste supports:
1) The two aluminum rails (15) on the top of which the aluminum frame (5) with 4 included boards is sliding from position (1) to position (2) with the help of small wheels (5a).
2) In the same level there are the perforated tubes (16) and (17) which are connected with one double electric valve (20) HB1 and HB2 (Sheet2, fig5) and they are used for cleaning the opposite sides of the rotating surface (toilet).
3) The surface (13) supporting the 4 fixed grooved cylinders (7)
4) The two surfaces (11) and (12) supporting the aluminum frame (5) the 4 boards in the corresponding positions (1) and (2)
5) The two micro-switches (MΔ1) and (MΔ2) corresponding to the position (35) and (36).
6) Two springs (34) (Sheet1, Fig2-3) and (Sheet2, Fig6). The said basin (10) has a hole (18) from were the cats waste with the water used for this purpose are guided to level (4) to a special pulping and liquefaction room (23).

On level (4) there are:
1) The pulping and liquefaction room (23) of the cat's waste.
2) The masher/ mixer (25)(12V 3A AC) and its wings (25a) and their two supporting branches (26).
3) The exit (27) of the apparatus from where the cats waste will be guided to the house drain.
4) The room (24) housing the electronic systems of the apparatus.
5) The double electric valve (20).
6) Pipes connected with the water network of the house (19).
7) Pipes transporting water from the first hydraulic valve (21).
   a) For the sliding of the aluminum frame (5) and the 4 boards from position (1) to position (2)
   b) For the initial cleaning of the first used surface of the toilet.
8) Pipes transporting water (22) from the second hydraulic valve (20) (HB2) for cleaning:
   1) The opposite side of the surface (toilet) and
   2) For a second cleaning of the pulping and liquefaction room (23) from shower (40).
9) Storeroom of the apparatus (28) for housing pipes, transformers (12V 3A AC, DC) cables, disinfecting and deodorant products,
10) Plastic baskets containing disinfecting products (39)
11) Sliding door (29) giving access to the electronic automation (29) of the apparatus (Sheet 2,Fig5)

### TYPES 2-3

In both types the shape of the apparatus is the same, a rectangular parallelepiped whose dimensions could be smaller in length (and in height), because the rotation mechanism of the 4 boards doesn't exist in those types, as the horizontal level (toilet) is single and fixed in its left side. In (Sheet 4,Fig11) and (Sheet 5,Fig14) we see the two plans of those two types which are identical. The cat will pass from level (1) and will sit on level (2), where it will leave its waste. As soon as the animal leaves the toilet, the cleaning will start, as we have already described before. The water for cleaning the surface (2) of the apparatus (toilet) will pass through the perforated tube (16) ejected to the dirty surface (2), the solid waste will be removed and collected by the drainpipe (10) and temporarily stored in the room (23) on level (4) as in type (1), In types (2,3) the basin ((10) which existed in type (1) is replaced by the drain-pipe (10) (Sheet 4,Fig12-13), and (Sheet 5,Fig15-16).
In (Sheet 4,Fig13) and (Sheet 5,Fig16) we see the jet of the water through the perforated pipe (16), the microswitch (MΔ1) in position (35), the surface 2(toilet) which somehow exalts, because it sits on springs, below which the microswitch (MΔ1) gives the order for starting the cleaning operation as soon as the cat leaves the toilet as in (type 1).

In level (4)(Sheet 4,Fig13) and (Sheet5, Fig16), we see the course of the waste from the toilet (level 2) through the drain-pipe to the temporarily store room (23), the vertical separating wall (23a) which prevents the malodor coming from the drain network of the house.

In type (2) (Sheet4, Fig13) we see the masher/mixer (25) and its wings (25a). In (Sheet 4,Fig 11) and (Sheet 5,Fig.15), we see the horizontal section of types (2,3) which differ only in the dimensions of their pipes which are considerably smaller in types (1-2), because the solid waste of the cat are pulped before their exit from the apparatus through tube (27) (Sheet4, Fig 12), while in the type (3) (Sheet5, Fig15), the dimensions of the tubes are larger.

In (Sheet 4,Fig12) and (Sheet5, fig15) we see the electric valve (20), water pipes (19) of the network of the house, water pipes (22) of the apparatus, room housing the electronics of the apparatus (24) and its sliding door (29), store room of the apparatus (28) and its sliding door (4), plastic baskets (38) containing deodorant and disinfecting products, plug of the apparatus (39).

### OPERATION OF THE APPARATUS

### TYPE 1

The cat is attracted to the apparatus by the smell of a substance mixed in the cleaning water of the toilet. When the cat gets used to it, we stop using it. The cat gets to the toilet from the upper part of it (level 1) and sits on top of the horizontal surface(2), which is formed by 4 boards, non touching each other (in level 1), and are included within the aluminum frame (5), on which the cat will leave its waste. After that, the 4 boards will rotate 180 degrees around their axis, in order to be cleaned with water from the house network, on their opposite surface, sheet 2, fig. (5).

The micro-switch (MΔ1) in position (35) is activated from a transformer (12V,3A DC), outside the apparatus, through the plug (39)

The microswitch activates:
1) One timer/relay, which is set to a specific time, operates the hydraulic valves (20) (HB1) (12V 0.4A DC), branched to the house network(19),supplying with water the apparatus for the preset time.
2) One same as above timer/relay, activating a masher/ mixer (25), which pulps and liquefies the cat's waste before their exit from the apparatus through the tube (27). The water supplied through the hydraulic valve (HB1) is flowing through the tube (21) to the plastic «T», which includes a cylinder-copper piston assembly (32) (sheet 3, fig.9). The water exerts a pressure on the piston (32a), which pushes the aluminum frame including the 4 boards from position (1) to position (2). The movement is achieved on the two aluminum rails (15), with the aid of the 4 small wheels (5a).

### Notice:

The rotation is achieved because the four axes (6) of the 4 boards (sheet 3, fig.8) extrude by 5 cm. from the left side of the frame, round which they are rotating, each of them having a guide-pin (9) (sheet 1,fig.2). Each guide-pin (9) enters in a grooved cylinder(7) following the groove (8) that makes each board travel the distance from 0 to 1 horizontally, from 1 to 2 making a rotation by 180 degrees and from 2 to 3 horizontally and finally stopping in position 2, the moment that cleaning of the first surface starts (sheet 3, fig.8).

Analytically, the following steps are followed starting from the right to the left, for each board:
Phase A: The guide-pin (9) is in rest-position of the boards «0» (sheet 3, fig.8, first position from the right).
Phase B: Starting of destabilization «0» and starting of rotation of the 4 boards.(sheet 3, fig.8, second position from the right).
Phase C: End of rotation by 180 degrees of the boards.
Phase D: Final stabilization position of the frame and the 4 boards before starting the washing of the apparatus (sheet 3, fig.8) first position left. The first phase corresponds to position 1 of the frame (sheet 1, fig.2), while the 4^{th} phase corresponds to position 2 (sheet 1, fig.3), the final before starting the cleaning of the apparatus by the jet of water from the perforated tube (16) (sheet 2, fig.4).

During the movement of the frame from position 1 to position 2, the perpendicular exit of the «T», will be free, and the water will pass through the perforated tube 16 (sheet 2, fig.4) and will be splashed on the dirty surfaces that have already turned upside down, in order to be cleaned for a predetermined duration, while the clean surfaces are on the top, ready for direct use. The water and the waste of the cat will be collected in the basin (10) (sheet 1, fig.4) and afterwards they will pass through the exit (18) of the basin on the level (3), in the mashing room (23) (sheet 2, fig.5),in order to become a dirty, viscously liquid before they leave the apparatus(27). At the end of the time duration of time-switch (X/Δ1), the first electric valve will stop supplying with water the mechanism, thus the water pressure will drop and the frame with the 4 boards will return in position (1) with the aid of the two springs (34) (sheet 1, fig.2-3) and (sheet 2, fig.6).

On the return of the frame (5) in its initial position (1), the micro-switch (MΔ2) in position (36) is energized and in his turn operates the electric valve (HB2) through the time-switch/relay (XΔ2) and starts the second cleaning of the other side of the apparatus and of the pulping room (23) with the shower (40).

As soon as the predetermined duration of the time-switch/relay (XΔ3) ends, all the operations are stopped, while the apparatus who is already in its initial position (1), is ready to be used from the start.

After each cleaning, the waste of the cat, together with the water used, are collected in the basin (10) on the level (3), below the level (2), and afterwards they pass through the exit (18) of the basin to the temporary drain and pulping room on level (4). In that room the waste are pulped by a masher/mixer (25 &25a), which is energized by the micro-switch (MΔ1) at the start of the first cleaning and operates during all the duration of both cleanings, and they pass through the exit (27) to the common drain of the house, passing obligatorily by the perpendicular separating wall (23a) -siphon-in order to restrict the bad smell.

### TYPES 2-3

In both the above types the cat gets to the toilet from the upper part of it (sheet 4, fig.11 and sheet 5, fig. 14 level 1) and sits on the stable, slightly inclined surface (2), is the cat's toilet. This surface is fixed on the left part, and slightly exalted on its right as it sits on two springs , below which the micro-switch (MΔ1) is placed. As soon as the cat leaves the toilet, on type (2) of the apparatus, the micro-switch (MΔ1) in position (35) (sheet 4, fig.13 and sheet 5, fig.16), activates simultaneously the electric valve (HB1) and the masher/mixer (25), so as the waste of the cat carried by the drain-pipe (10) through the room (23) (sheet 4,fig.13),and (sheet5,fig 16) after having been pulped by the masher-mixer(25 and 25a) in type 2, shall leave through the exit (27), after having passed obligatorily by the perpendicular separating wall (23a)-siphon- in order to restrict the bad smell of the drain of the house to pass to the apparatus.

In type (3), like in type (2), the micro-switch (MΔ1) will activate the electric valve (HB1), in order to start the cleaning of the toilet, the waste will follow the same procedure as in type (2), and will pass through the exit (27) of the apparatus, using tubes of larger cross-section (sheet 5, fig.16), because the waste in this case are not pulped.

## Claims

1. Self cleaning hydraulic toilet for small domestic animals comprising a substantially parallelepipedal housing with a toilet surface (2) whereupon the animal sits whilst visiting the toilet, said toilet being connected to a pressurized water input (19) and a drain output (27), wherein a cleaning operation of the toilet surface (2) is initiated as soon as the animal leaves said surface (2), at least one perforated tube means (16) being employed for ejecting water onto the dirty toilet surface (2) during said cleaning operation, **characterized by** said toilet surface (2) being located within an opening at the middle of an upper part (1) that extends at the top of said substantially parallelepipedal housing with one end thereof being connected to an arrangement of springs, a micro-switch (MΔ1) energized by a 12 V electrical power source being employed for initiating said cleaning operation, said micro-switch (MΔ1) being located underneath said arrangement of springs and giving the order for initiating the cleaning operation as soon as the animal leaves said toilet surface, wherein a loading condition of the springs corresponds to the animal sitting upon said toilet surface (2) thereby maintaining said toilet surface (2) at a horizontal orientation, whilst an unloading condition of the springs as the animal leaves said toilet surface (2) results in said toilet surface (2) acquiring a slightly inclined orientation and in said micro-switch (MΔ1) being activated for the initiation of a cleaning operation of said toilet surface (2), said self cleaning hydraulic toilet further comprising in combination, within said parallelepipedal housing underneath said toilet surface (2), a first compartment (24) with a sliding door (29) for access therein, said compartment (24) housing at least one time switch/relay electric valve (20) that supplies water under pressure to said at least one perforated tube means (16) to effect cleaning of said toilet surface (2), a compartment (23) for the temporary collection of waste water and solid waste from the cleaning operation of said toilet surface (2), a vertically oriented wall (23a) adapted to operate as a malodor eliminating siphon provided upstream said drain output (27) and a second compartment (28) with a sliding door (4) for access therein, said compartment (28) used for the storage of equipment of the apparatus such as pipes, transformers, cables, etc. and of consumables such as disinfecting and deodorant products.

2. Self cleaning hydraulic toilet for small domestic animals according to claim 1, **characterized by** that said toilet surface (2) whereupon the animal sits whilst visiting the toilet is a solid planar surface, said self cleaning hydraulic toilet employing a single perforated tube means (16) and a single time switch/relay electric valve (20), said time switch/relay electric valve (20) supplying water under pressure to said perforated tube means (16), said self cleaning hydraulic toilet further comprising a drainpipe (10) located opposite to the end of said toilet surface (2) being connected to said arrangement of springs, said drainpipe (10) leading waste water and solid waste from the cleaning operation of said toilet surface (2) flowing therein from said toilet surface (2) having a slightly inclined orientation to said compartment (23) for the temporary collection thereof.

3. Self cleaning hydraulic toilet for small domestic animals according to claim 2, **characterized by** that said drain output (27) is of a large cross-section so as to directly receive said waste water and solid waste from the cleaning operation of said toilet surface (2) flowing through said compartment (23) for the temporary collection thereof and past said vertically oriented wall (23a) adapted to operate as a malodor eliminating siphon.

4. Self cleaning hydraulic toilet for small domestic animals according to claim 2, **characterized by** that it further comprises a masher/mixer (25) additionally employed for pulping the waste, said masher/mixer (25) being located within said compartment (23) for the temporary collection of waste water and solid waste from the cleaning operation of said toilet surface (2), wherein said masher/mixer (25) is activated by the same said single time switch/relay electric valve (20) supplying water under pressure to said perforated tube means (16).

5. Self cleaning hydraulic toilet for small domestic animals according to claim 1, **characterized by** that said toilet surface (2) whereupon the animal sits whilst visiting the toilet is a rotatable surface comprising four identical boards arranged parallel to each other within a surrounding aluminium frame (5) mounted onto two pairs of wheels (5a) adapted to reciprocatingly slide said aluminum frame (5) along a pair of underlying aluminium rails (15), each of said identical boards being pivotally mounted with axial shaft means (6) on either side of said aluminium frame (5), a side wall surface (13) being provided at one end of said aluminium frame (5), said side wall surface (13) bearing fixedly mounted and perpendicularly protruding four cylinders (7), each one of said four cylinders (7) oriented in alignment with a corresponding protruding axial shaft means (6) of each one of said equivalent four boards, each one of said protruding axial shaft means (6) having a guide-pin end (9) and each one of said four cylinders (7) having a groove (8) for receiving said guide-pin end (9) of said protruding axial shaft means (6) of each one of said equivalent four boards, the engagement of said guide-pin ends (9) of said protruding axial shaft means (6) of said equivalent four boards within said grooves (8) of said perpendicularly protruding four cylinders (7) defining an arc of rotation of 180° of said four boards for alternatively bringing on top of said toilet surface (2) one or the other side of said four boards, a pair of springs (34) connecting said aluminium frame (5) to a side wall of said parallelepipedal housing opposite to said side wall surface (13), a pair of supporting surfaces (11, 12) provided underneath said reciprocatingly movable aluminium frame (5) at opposing ends thereof, said supporting surface (11) inhibiting a rotational movement of said identical four boards when said toilet surface (2) maintains a rest position and said springs (34) are unloaded and said supporting surface (12) inhibiting a rotational movement of said identical four boards when said toilet surface has rotated by 180° and said springs (34) are in a loaded condition, wherein, as the animal leaves said toilet surface (2), said micro-switch (MΔ1) activates a time/switch relay (XΔ1) for the initiation of a cleaning operation of said toilet surface (2) with activation of said time-switch electric valve (20), said time-switch electric valve (20) supplying water under pressure through a tube (21) to a plastic T section (31) wherein water firstly moves through a copper/piston cylinder assembly (32) and exerts pressure onto an angle-elbow (33) of said aluminium frame (5) for effecting a sliding movement thereof from an initial rest position to a position wherein said four equivalent boards have rotated by 180° and wherein water supplied to said plastic T section (31) subsequently passes through a central arm of said T section (31) to said perforated tube means (16) for cleaning the previously upper used toilet surface (2) of said four boards that has following rotation of 180° thereof become the bottom surface of the same and wherein, following a predetermined duration of cleaning set by said time-switch/relay (XΔ1), said time switch/relay valve (20) terminates supplying water under pressure and thereby said aluminium frame (5) incorporating said identical four boards returns to said initial rest position through an unloading process of said springs (34).

6. Self cleaning hydraulic toilet for small domestic animals according to claim 5, **characterized by** that it further comprises a basin (10) located underneath said toilet surface (2) for the collection of waste water and solid waste from the cleaning operation of said toilet surface (2), said basin (10) including an exit (18) through which waste water and solid waste from the cleaning operation of said toilet surface (2) is led into said compartment (23) for the temporary collection thereof, wherein a masher/mixer (25) additionally employed for pulping the waste is provided within said compartment (23) and initiates a pulping process following activation by said micro-switch (MΔ1) of an additional time-switch/relay (XΔ2), said self cleaning hydraulic toilet further comprising a second time switch/relay electric valve (20), said second time-switch relay electric valve (20) being activated, as soon as said aluminium frame (5) incorporating said identical four boards returns to said initial rest position through an unloading process of said springs (34), by an additional time-switch/relay (XΔ3) initiated by an additional micro-switch (MΔ2), wherein said second time switch/relay electric valve (20) supplies water under pressure to an additional perforated tube means (17) for additionally cleaning said toilet surface (2) and to a shower means (40) located within said compartment (23) wherein pulping of the waste is effected, wherein said additional time-switch/relay (XΔ2) initiating the pulping process within said compartment (23) is set to terminate at the end of the cleaning process effected with water being sprayed through said perforated tube means (16), said additional perforated tube means (17) and said shower means (40).

## Patentansprüche

1. Selbstgereinigte hydraulische Toilette für kleine Haustiere, die wesentlich aus einem parallelflachen Gehäuse mit einer Toilettenoberfläche (2) besteht, worauf das Tier sitzt, wenn es die Toilette besucht, wobei die besagte Toilette sich mit einer Einleitung (19), die unter Wasserdruck ist, und einem Ableitungsausgang (27) verbindet, indem das Reinigungsverfahren der Toilettenoberfläche (2) gleich wenn das Tier die Oberfläche verlässt in Betrieb gesetzt wird, wobei wenigstens ein durchbohrter Rohr (16) vorgesehen ist, der für das Wasserspitzen auf die schmutzige Toilettenoberfläche (2) während des Reinigungsverfahrens benutzt wird, **dadurch gekennzeichnet, daß** die besagte Toilettenoberfläche (2) sich an einer Öffnung in der Mitte eines Oberteils (1) befindet und sich bis an der Spitze des wesentlich besagten parallelflachen Gehäuses erstreckt mit einer deren Endseite (der Toilettenoberfläche) sich an einer Federanordnung anschließen, wo ein Kleinschalter (MΔI) von einer elektrischen Quelle -mit einer Stärke von 12 V - aktiviert wird, und das besagte Reinigungsverfahren in Betrieb setzt, wobei der besagte Kleinschalter (MΔI) sich unter der besagte Federanordnung befindet und gibt den Auftrag, sogleich das Tier die besagte Toilettenoberfläche verlässt, das Reinigungsverfahren in Betrieb gesetzt zu werden, indem eine unter Last Situation der Federn entspricht eine Situation wo das Tier auf die besagte Toilettenoberfläche (2) sitzt und auf diese weise die besagte Toilettenoberfläche (2) auf eine horizontale Orientierung halten, dabei eine ohne Last Situation der Federn gleich wenn das Tier die Toilettenoberfläche (2) verlässt, führt zum Ergebnis, dass die besagte Toilettenoberfläche (2) eine etwas geneigte Orientierung bekommt und der besagte Kleinschalter (MΔI) aktiviert wird das Reinigungsverfahren der besagten Toilettenoberfläche (2) in Betrieb zu setzen, wobei die besagte selbstgereinigte hydraulische Toilette weiterhin und im Zusammenhang, dass im inneren des besagten parallelflachen Gehäuses unter der besagten Toilettenoberfläche (2) aus einem ersten Raum (24) besteht, der eine Schiebtür (29) für den Zugang hat, wobei im inneren des besagten Raumes (24) ein Zeitschalter/elektrischer Ventil (20) vorgesehen ist, der das unter Druck Wasser dem wenigstens besagten durchbohrten Rohr (16) leitet, um das Reinigungsverfahren der besagten Toilettenoberfläche (2) zu ermöglichen, weiterhin aus einem - anderen- Raum (23) besteht, für den vorläufigen Transport der Abwässern und Feststoffen vom Reinigungsverfahren der besagten Toilettenoberfläche (2), wobei eine vertikal orientierte Wand (23a) vor dem besagten Ableitungsausgang (27) vorgesehen ist, und so angepasst, dass sie als Scheidewand für das Auslöschen des Gestankes funktioniert und weiterhin aus einem zweiten Raum (28) bestehen mit einer Schiebtür (4) für den Zugang im inneren des Raumes, wobei der besagte Raum (28) für das Lager von Vorrichtungsausrüstungen, sowie Rohren, Transformatoren, Kabeln und verbrauchsmitteln sowie Desinfektionen und Desodorantprodukte benutzt wird.

2. Selbstgereinigte hydraulische Toilette für kleine Haustiere nach Anspruch 1, **dadurch gekennzeichnet, daß** die besagte Toilettenoberfläche (2) worauf das Tier sitzt wenn es sie besucht, eine starr Ebene Oberfläche ist, wobei die besagte selbstgereinigte hydraulische Toilette einen durchbohrten Rohr (16) und einen Zeitschalter/elektrischen Ventil (20) benutzt, wobei der Zeitschalter/elektrischer Ventil (20) dem besagten durchbohrten Rohr (16) Wasser unter Druck leitet, wobei die besagte selbstgereinigte hydraulische Toilette weiterhin einen Ableitungsleitung (10) enthält, der sich gegenüber der angeschlossenen Endseiten der besagten Toilettenoberfläche (2) an die besagte Federanordnung befindet, wobei die besagte Ableitungsleitung (10) den vom Reinigungsverfahren der besagten Toilettenoberfläche (2) hergekommenen Abwässern und Feststoffen, die im inneren der Ableitungsleitung von der etwas geneigten Orientierung der besagten Toilettenoberfläche durchfließen zum besagten Raum(23) für den vorläufigen Transport führt.

3. Selbstgereinigte hydraulische Toilette für kleine Haustiere nach Anspruch 2, **dadurch gekennzeichnet, dass** der besagte Ableitungsausgang (27) eine große Öffnung hat, um den Abwässern und Feststoffen direkt vom Reinigungsverfahren entgegenzunehmen, die durch den besagten Raum (23) für vorläufigen Transport und durch die besagte vertikal orientierte Wand (23 a), die so angepasst ist, um als Scheidewand zu funktionieren und jeden Gestank auszulöschen, fließen.

4. Selbstgereinigte hydraulische Toilette für kleine Haustiere nach Anspruch 2, **dadurch gekennzeichnet, dass** sie weiterhin aus einer Mixvorrichtung (25) besteht, die zusätzlich für das Zerquetschen der Abwässern benutzt wird, wobei die besagte Mixvorrichtung (25) sich im inneren des besagten Raumes (23) für vorläufigen Transport der Abwässern und Feststoffen vom Reinigungsverfahren der besagten Toilettenoberfläche (2) befindet, wobei die besagte Mixvorrichtung (25) von dem selben besagten Zeitschalter/elektrischer Ventil (20), der das unter Druck Wasser dem besagten durchbohrten Rohr (16) leitet, aktiviert wird.

5. Selbstgereinigte hydraulische Toilette für kleine Haustiere nach Anspruch 1, **dadurch gekennzeichnet, dass** die besagte Toilettenoberfläche (2) worauf das Tier sitzt, wenn es sie besucht, eine drehbare Oberfläche ist, die aus vier gleichen Brettern besteht, dass eins nach dem andern angeordnet ist, im inneren eines Eisenblechsrahmens (5), der sich auf zwei Radpaare (5a) beruht, die so angepasst sind, dass der besagte Eisenblechrahmen (5) der Länge nach eines untergebrachten Eisenblechschienenpaares (15) hin und her ausgleitet, wobei jedes von den besagten gleichen Brettern so eingesetzt ist, dass sich durch einen Achsenmittel (6) beiderseits des besagten Eisenblechsrahmens(5) drehen kann, wobei an einer Endseite des besagten Eisenblechrahmens (5) eine Fläche seitlicher Wand (13) vorgesehen ist, wobei diese Fläche seitlicher Wand (13) vier fest eingesetzte und vertikal vorspringende Zylinder (7) trägt, und jeder von den besagten vier Zylindern (7) ist in gerader Linie mit dem entsprechenden Achsenmitteln (6) jedes von dem besagten vier gleichen Brettern orientiert ist, wobei jedes der besagten vorspringenden Achsenmitteln (6)einen End -Führerzapfen (9) hat und jeder von den besagten vier Zylindern (7) eine Rinne (8) für die Aufnahme der besagten End-Führerzäpfen (9) des besagten vorspringenden Achsenmittels (6) von jedem der besagten vier gleichen Brettern hat, wobei das Einrasten des besagten End-Führerzapfens (9) der besagten vorspringenden Achsenmitteln (6)der besagten vier gleichen Brettern im inneren der besagten Rinnen (8) der besagten vertikal vorspringenden vier Zylindern (7) einen Drehbogen von 180o der besagten vier Brettern bestimmt, so dass sich die eine oder die andere Seite der besagten vier Brettern wechselweise auf die obere Seite der besagten Toilettenoberfläche hinbewegt, wobei ein Federpaar (34) ist für die Verbindung des besagten Eisenblechrahmens (5) an der seitlichen Wand des besagten parallelflachen Gehäuses gegenüber der besagten Fläche seitlicher Wand (13) vorgesehen, wobei ein Paar von Stützenflächen (11, 12) ist unter der beiderseits Enden des besagten hin -und her bewegten Eisenblechrahmens (5) vorgesehen, wobei die besagte Stützenfläche (11) hindert die drehbare Umstellung der besagten gleichen vier Brettern, wenn die besagte Toilettenoberfläche (2) im Ruhestand kommt und die besagten Federn (34) keine Last tragen und die besagte Stützenfläche (12) hindert die drehbare Umstellung der besagten gleichen vier Brettern wenn die besagte Toilettenoberfläche sich um 180o dreht und die besagten Federn (34) sich in Beladungszustand befinden, wobei gleich wenn das Tier die besagte Toilettenoberfläche (2) verlässt, der besagte Kleinschalter (MΔI) aktiviert den Zeitschalter/Relais (XΔI) und setzt eine Funktion des Reinigungsverfahrens der besagten Toilettenoberfläche durch die Aktivierung des besagten Zeitschalters/elektrischen Ventils (20) in Betrieb, wobei der besagte Zeitschalter/elektrischer Ventil (20) Wasser unter Druck durch einen Rohr (21) zu einem plastischen formbaren Querschnitt -T (31) liefert, wobei am Anfang das Wasser durch einen Kupfer-Zylinder/Kolben (32) fließt und übt auf einen eckigen Arm (33) des besagten Eisenblechrahmens (5) Druck, um eine Ausgleitensumstellung des letzten zu erregen und zwar vom Ruhestand zu einer Position, wo die besagten vier gleichen Brettern gegen 180o umgedreht werden und wobei das Wasser dem formbaren Querschnitt T (31) geliefert wird, weiterhin durchfliesst durch einen zentralen Arm des besagten Querschnitts T (31) an dem besagten durchbohrten Rohr (16) für die Reinigung der vorig benutzten Seite der Toilettenoberfläche (2) der besagten vier Brettern, welche (Seite) infolge der Umdrehung von 180o die untere Seite der Toilettenoberfläche wird, und wobei nach einer vorbestimmten Reinigungsdauer, die von dem besagten Zeitschalter/Relais (XΔI) geregelt wird, der besagte Zeitschalter/Ventil Relais (20) vollendet die Lieferung des Wassers unter Druck und so der besagte Eisenblechrahmen (5), der die besagten vier gleichen Brettern umfasst, kehrt durch ein Abladungsverfahren der besagten Federn (34) in der ursprünglichen Ruhestand zurück.

6. Selbstgereinigte hydraulische Toilette für kleine Haustiere nach Anspruch 5, **dadurch gekennzeichnet, dass** sie übrigens ein trichterförmigen Becken (10) enthält, das sich unter die besagte Toilettenoberfläche (2) befindet und für den Transport der Abwässern und Feststoffen vom Reinigungsverfahren der besagten Toilettenoberfläche (2) bestimmt ist, wobei das besagte trichterförmiges Becken (10) mit einem Ausgang (18) vorgesehen ist, durch den die Abwässern und die Feststoffe vom Reinigungsverfahren der besagten Toiletenoberfläche (2) zum besagten Raum (23) für vorläufigen Transport geführt werden, wobei im selben Raum (23) eine Mixvorrichtung (25) vorgesehen ist, die zusätzlich für das Zerquetschen der Abwässern benutzt wird und setzt das Zerquetschenverfahren nach der Aktivierung durch den besagten Kleinschalter (MΔI) eines zusätzlichen Zeitschalters/Relais (XΔ2) in Bewegung, wobei die besagte selbstgereinigte hydraulische Toilette, übrigens einen zweiten Zeitschalter/elektrischen Ventil (20) enthält, wobei dieser besagter zweiter Zeitschalter/elektrischer Ventil (20) aktiviert wird, sogleich der besagte Eisenblechrahmen (5) der die vier selben Brettern umfängt, durch ein Abladungsverfahren der besagten Federn (34) von einem zusätzlichen Zeitschalter/Relais (XΔ3), der sich durch einen zusätzlichen Kleinschalter (MΔ2) in Bewegung gesetzt wird, zum ursprünglichen Ruhestand zurückkehrt, wobei der zweite Zeitschalter/elektrischer Ventil (20) dem zusätzlichen durchbohrten Rohr (17) Wasser unter Druck liefert, für die zusätzliche Reinigung der besagten Toilettenoberfläche (2) und zu einer Dusche (40), die sich im inneren des besagten Raumes (23) befindet, wo das Zerquetschen der Feststoffen statt findet, wobei der besagte zusätzlicher Zeitschalter/Relais (XΔ2), der das Zerquetschenvefahren im inneren des besagten Raumes (23) in Bewegung setzt, so geregelt wird, dass er am Ende des Reinigungsverfahrens zum Stillstand kommt, indem das Wasser durch den besagten durchbohrten Rohr (16), durch den besagten zusätzlichen durchbohrten Rohr (17) und durch die besagte Dusche (40) gespritzt wird.

## Revendications

1. La toilette hydraulique autonettoyante pour petits animaux domestiques, comportant essentiellement une coque parallélépipédique avec une surface de la toilette (2) sur laquelle l'animal s'assoit chaque fois qu'il visite la toilette, ladite toilette étant reliée à une entrée (19) d'eau pressurisée et une sortie d'assainissement (27), où une opération de nettoyage de la surface de la toilette (2) est déclenchée dès que l'animal quitte ladite surface (2), où au moins un tuyau perforé (16) est utilisé pour l'évacuation d'eau sur la surface infecte de la toilette (2) pendant l'opération dudit nettoyage, **caractérisée en ce que** ladite surface de nettoyage (2) se situe dans une orifice au milieu d'une partie supérieure (1) qui s'étend au sommet de ladite coque substantiellement parallélépipédique avec une extrémité laquelle est connectée à un assemblage de ressorts, un micro-commutateur (MΔ1) activé par une source de courant électrique de 12 Volts qui est utilisé pour déclencher ladite opération de nettoyage, où ledit micro-commutateur (MΔ1) étant situé sous ledit assemblage de ressorts, donne l'ordre d'initier l'opération de nettoyage juste après que l'animal ait quitté ladite surface de la toilette, où un dispositif de chargement des ressorts correspond à la condition où l'animal s'assoit sur ladite surface de la toilette (2) conservant de cette manière ladite surface de la toilette (2) dans une orientation horizontale, tandis que l'absence d'un dispositif chargement de ressorts lorsque l'animal quitte ladite surface de la toilette (2) aurait pour conséquence, concernant ladite surface de la toilette (2), d'acquérir une orientation légèrement inclinée et ledit micro-commutateur (MΔ1) d'être activé pour le déclenchement d'une opération de nettoyage de ladite surface de la toilette (2), où ladite toilette hydraulique autonettoyante comprend en outre en combinaison, à l'intérieur de ladite coque parallélépipédique, sous ladite surface de la toilette (2), un premier compartiment (24) avec une porte amovible (29) pour l'accès à l'intérieur de l'animal, où à l'intérieur dudit compartiment (24) est logé au moins un dispositif de disjonction/relais chronométré à valve électrique (20) qui fournit l'eau pressurisée au dit au moins un tuyau perforé (16) pour la réalisation du nettoyage de ladite surface de la toilette (2), un compartiment (23) pour la collecte provisoire des déchets liquides et solides provenant de l'opération de nettoyage de ladite surface de la toilette (2), où une paroi verticalement orientée (23a) est octroyée en amont de la sortie d'assainissement (27) adaptée afin de fonctionner comme siphon de suppression des odeurs fétides et un second compartiment (28) munie d'une porte amovible (4) pour l'accès à l'intérieur de l'animal, où ledit second compartiment (28) est utilisé pour le stockage de l'équipement de l'appareil, tels les tuyaux, les transformateurs, les câbles, etc. mais également les produits consommables tels que les désinfectants et les désodorisants.

2. La toilette hydraulique autonettoyante pour petits animaux domestiques selon la Revendication 1, **caractérisée en ce que** ladite surface de toilette (2) sur laquelle l'animal s'assoit chaque fois qu'il visite la toilette est une surface plane solide, où ladite toilette hydraulique autonettoyante utilise un tuyau perforé (16) et un seul dispositif de disjonction/relais chronométré à valve électrique (20), ledit dispositif de disjonction/relais chronométré à valve électrique (20) approvisionne l'eau sous pression au dit tuyau perforé (16), où ladite toilette hydraulique autonettoyante comprend en outre un sortie de drainage (10) placé en face de l'extrémité de ladite surface de la toilette (2) reliée au dit assemblage des ressorts, où ladite sortie de drainage (10) permet la circulation des déchets liquides et solides issus de l'opération de nettoyage de ladite surface de la toilette (2), lesquels déchets coulent à la sortie de drainage de ladite surface de la toilette (2), laquelle a une orientation légèrement inclinée, jusqu'au dit compartiment (23) pour leur collecte provisoire.

3. La toilette hydraulique autonettoyante pour petits animaux domestiques selon la Revendication 2, **caractérisée en ce que** ladite sortie d'assainissement (27) est faite d'un grand diamètre afin de recevoir directement lesdits déchets liquides et solides issus de l'opération de nettoyage de ladite surface de la toilette (2), lesquels coulent à travers ledit compartiment (23) pour la collecte provisoire et à travers la paroi verticalement orienté (23a) qui est adaptée pour fonctionner comme siphon de suppression des odeurs fétides.

4. La toilette hydraulique autonettoyante pour petits animaux domestiques selon la Revendication 2, **caractérisée en ce qu'**elle comprend en plus un broyeur/mélangeur (25) qui est utilisé additionnellement pour le broyage des déchets, où ledit broyeur/mélangeur (25) se situe à l'intérieur dudit compartiment (23) pour la collecte provisoire des déchets liquides et solides issus de l'opération de nettoyage de ladite surface de la toilette (2), où ledit broyeur/mélangeur (25) est activé par le même dispositif de disjonction/relais chronométré à valve électrique (20) qui approvisionne l'eau pressurisée au dit tuyau perforé (16).

5. La toilette hydraulique autonettoyante pour petits animaux domestiques selon la Revendication 1, **caractérisé en ce que** ladite surface de la toilette (2) sur laquelle l'animal s'assoit chaque fois qu'il visite la toilette est une surface rotative laquelle comporte quatre lattes identiques qui sont disposées l'une parallèlement à côté de l'autre à l'intérieur d'une ossature en aluminium (5) montée sur deux paires de roues (5a) qui sont adaptées afin que glisse réciproquement ladite ossature en aluminium (5) le long d'une paire de rails en aluminium (15), où chacune desdites lattes identiques sont montées d'une manière rotative au moyen d'un axe (6) de chaque côté de ladite ossature en aluminium (5), où à une extrémité de ladite ossature en aluminium (5) est octroyée une surface murale latérale (13), où ladite surface murale latérale (13) porte d'une manière fixe et perpendiculairement montés quatre cylindres saillants (7), chacun desdits quatre cylindres (7) orienté dans un alignement avec un axe saillant correspondant à chacun desdites quatre lattes identiques, où chacun desdits axes saillants (6) a une extrémité de guidage (9) et chacun desdits cylindres (7) a une raie (8) pour recevoir ladite extrémité de guidage (9) desdits axes saillants (6) de chacun desdites quatre lattes identiques, où l'implication desdites extrémités de guidage (9) desdits axes saillants (6) desdites quatre lattes identiques à l'intérieur desdites raies (8) desdits quatre cylindres perpendiculairement saillants (7) décrit un arc de rotation de 180° desdites quatre lattes afin de porter alternativement sur la face supérieure de ladite surface de la toilette (2) l'une ou l'autre côté desdites quatre lattes, où une paire des ressorts (34) est octroyée pour la connexion de ladite ossature en aluminium (5) à un mur latéral de ladite coque en forme parallélépipédique vis-à-vis de ladite surface murale latérale (13), où une paire des surfaces d'appui (11, 12) sont fournies sous les extrémités réciproquement opposées de l'ossature mobile en aluminium (5), où ladite surface d'appui (11) empêche le déplacement rotatif desdites quatre lattes identiques lorsque ladite surface de la toilette (2) se trouve en position de repos et lesdits ressorts (34) sont déchargés et la surface d'appui (12) empêche le déplacement rotatif desdites quatre lattes identiques lorsque ladite surface de toilette tourne à 180° et lesdits ressorts (34) sont en condition de chargement, où dès que l'animal quitte ladite surface de la toilette (2), ledit micro-commutateur (MΔ1) active un dispositif de disjonction/relais chronométré (XΔ1) pour le déclenchement de l'opération de nettoyage de ladite surface de la toilette (2) avec l'activation dudit dispositif de disjonction/relais chronométré à valve électrique (20), où ledit dispositif de disjonction/ relais chronométré à valve électrique (20) approvisionne l'eau pressurisée au moyen d'un tuyau (21) à un tuyau en plastique ayant la forme T (31) où l'eau circule premièrement à travers un dispositif comprenant un cylindre/piston en cuivre (32) et exerce une pression sur un bras angulaire (33) de ladite ossature en aluminium (5) pour effectuer un déplacement amovible de cette dernière d'une position initiale de repos dans une position où lesdites quatre lattes identiques aient tourné à 180° et où l'eau fournie dans ledit tuyau en plastique ayant la forme T (31) traverse ensuite à travers un bras central dudit tuyau en plastique ayant la forme T (31) au dit tuyau perforé (16) pour le nettoyage de la face supérieure précédemment utilisée de la surface de la toilette (2) desdites quatre lattes lesquelles deviennent, suite à une rotation de 180°, une face basse de la surface de la toilette et où, après une durée prédéterminée par ledit dispositif de disjonction/relais chronométré (XΔ1), où ledit dispositif de disjonction/relais chronométré à valve électrique (20) complète l'approvisionnement d'eau pressurisée et par la suite ladite ossature en aluminium (5) laquelle porte lesdites quatre lattes identiques retourne à ladite position de repos initiale par un processus de déchargement desdits ressorts (34).

6. La toilette hydraulique autonettoyante pour petits animaux domestiques selon la Revendication 5, **caractérisée en ce qu'**elle comporte en plus une bassine (10) située sous ladite surface de la toilette (2) pour la collecte des déchets liquides et solides issus de l'opération de nettoyage de ladite surface de la toilette (2), où ladite bassine (10) comprend une sortie (18) à travers laquelle les déchets liquides et solides issus de l'opération de nettoyage de ladite surface de toilette (2) sont transférés dans ledit compartiment (23) pour leur collecte provisoire, où un broyeur/mélangeur additionnel (25) est utilisé dans ledit compartiment (23) pour réduire en bouillie les déchets et initie un processus de réduction en bouillie après l'activation à travers ledit micro-commutateur (MΔ1) d'un dispositif additionnel de disjonction/relais chronométré (XΔ2), où ladite toilette hydraulique autonettoyante comporte en outre un second dispositif de disjonction/relais chronométré à valve électrique (20), où ladite seconde dispositif de disjonction/relais chronométré à valve électrique (20) est activée, dès que ladite ossature en aluminium (5) qui porte lesdites quatre lattes identiques retourne à ladite position de repos initiale à travers un processus de déchargement desdits ressorts (34), par un dispositif de disjonction/relais chronométré (XΔ3) qui est mis en mouvement par un micro-commutateur additionnel (MΔ2), où ledit second dispositif de disjonction/relais chronométré à valve électrique (20) approvisionne l'eau pressurisée vers un tuyau perforé additionnel (17) pour ladite opération additionnelle de nettoyage de la surface de la toilette (2) et vers une douche (40) située dans ledit compartiment (23) où est effectuée la réduction en bouillie des déchets, où ledit dispositif additionnel de disjonction/relais chronométré (XΔ2) qui met en mouvement le processus de réduction en bouillie à l'intérieur dudit compartiment (23) est réglé afin d'achever le processus de l'opération de nettoyage qui effectué par la pulvérisation d'eau par ledit tuyau perforé (16), par ledit tuyau perforé additionnel (17) et par la ladite douche (40).
